# EUROPÄISCHE PATENTSCHRIFT

(11) **EP 1 538 955 B1**
(45) Veröffentlichungstag und Bekanntmachung des Hinweises auf die Patenterteilung: **23.07.2014**
(21) Anmeldenummer: 03750430.5
(22) Anmeldetag: 23.08.2003
(51) Int. Cl.: A47C 20/08, A47C 20/04, A61G 7/015

(54) **ELEKTROMOTORISCHER MÖBELANTRIEB**
ELECTROMOTIVE DRIVE FOR FURNITURE
DISPOSITIF D'ENTRAINEMENT A MOTEUR ELECTRIQUE, DESTINE A UN MEUBLE

(30) Priorität: 16.09.2002 DE 20214374 U; 10.02.2003 DE 20302139 U
(43) Veröffentlichungstag der Anmeldung: 15.06.2005
(73) Patentinhaber: DewertOkin GmbH, 32278 Kirchlengern (DE)
(72) Erfinder: ROITHER, Andreas, 32130 Enger (DE)
(74) Vertreter: Dantz, Jan Henning
(86) Internationale Anmeldenummer: PCT/EP2003/009358
(87) Internationale Veröffentlichungsnummer: WO 2004/032687

(56) Entgegenhaltungen:
- WO-A-96/29970
- DE-A- 4 136 373
- DE-U- 8 800 360
- DE-U- 20 104 961
- US-A- 5 075 911
- US-A- 5 568 661
- US-A- 5 608 932
- US-A- 6 088 853
- US-A1- 2002 036 421
- US-B1- 6 269 707

## Beschreibung

Die Erfindung betrifft einen elektromotorischen Möbelantrieb, mit maximal zwei Antriebsmotoren und zwei antreibbaren Antriebszügen, bei dem jedes Abtriebsglied eines Antriebszuges mit einem Anlenkhebel zusammenwirkt, der drehfest auf ein schwenkbares Möbelbauteil aufgesetzt ist, und jeder Antriebszug zumindest teilweise in einem Gehäuse angeordnet ist.

Der in Frage kommende elektromotorische Möbelantrieb wird bevorzugt zum Verstellen der Rückenlehne und des Fußteils eines Lattenrostes verwendet. Ein derartiger Möbelantrieb ist ein Doppelantrieb, bei dem beide Antriebszüge in einem gemeinsamen Gehäuse angeordnet sind, wie beispielsweise aus den Druckschriften DE 88 00 360 U1 oder US 2002/0036421 A1 bekannt. Der Antriebsgetriebemotor ist mit einem die Motordrehzahl herabsetzenden Schneckentrieb ausgestattet. Das Schneckenrad ist üblicherweise mit einer Spindel gekoppelt, auf die eine Spindelmutter drehfest aufgesetzt ist. Da die Spindelmutter gegen Drehung gesichert ist, verschiebt sie sich je nach Drehrichtung der Spindel. Der Anlenkhebel kontaktiert die freie Stirnfläche der Spindelmutter, so dass bei der Ausfahrbewegung das angeschlossene Möbelbauteil verschwenkt wird. In anderer Ausführung ist es möglich, dass die Spindel feststehend gelagert ist und dass das Abtriebsglied des elektromotorischen Möbelantriebes eine Innengewindebohrung aufweist, so dass bei Drehung des Abtriebsgliedes der gesamte Möbelantrieb auf der Spindel hin und her fahren kann. Der in Rede stehende elektromotorische Möbelantrieb kann jedoch auch ein Einzelantrieb mit einem Antriebsmotor und einem Antriebszug sein. Derartige Antriebe werden unter anderem auch zum Verstellen der verstellbaren Teile eines Sessels verwendet. Die in Rede stehenden Möbelantriebe werden in großen Stückzahlen als Massenprodukte hergestellt. Sie sollten demzufolge möglichst preiswert herzustellen sein.

In der Normalausführung ist das Schneckenrad und die Spindelmutter sowie das Gehäuse aus einem Kunststoff gefertigt. Sofern es sich um einen Doppelantrieb handelt, ist dieser so ausgelegt, dass in den Endbereichen von oben her U-förmige Ausnehmungen vorgesehen sind, so dass der gesamte Möbelantrieb auf die Wellen eines Lattenrostes geschoben werden kann. Gesichert wird der Möbelantrieb dann durch zwei Schieber, die beweglich in dem Gehäuse geführt sind und in der Schließstellung die Wellen übergreifen. Sofern der Möbelantrieb als Doppelantrieb ausgebildet ist, ist das Gehäuse vom Querschnitt her relativ klein; es ist jedoch äußerst lang gestreckt bedingt durch die Abstände der beiden Wellen eines Lattenrostes. Da auf das Gehäuse relativ große Kräfte einwirken, muss es entsprechend verwindungssteif ausgelegt sein, da ansonsten die Antriebselemente einem erhöhten Verschleiß unterlegen sind. Die in Rede stehenden Möbelantriebe haben sich in der Praxis zwar bestens bewährt, nachteilig sind jedoch die relativ hohen Herstellkosten für das Gehäuse, da dazu aufwendige Werkzeuge notwendig sind. Nachteilig ist auch, dass es sich bei Kunststoffen um Werkstoffe handelt, mit einer relativ geringen Festigkeit.

Der Erfindung liegt die Aufgabe zugrunde, einen elektromotorischen Möbelantrieb, insbesondere einen als Doppelantrieb ausgebildeten Möbelantrieb so zu gestalten, dass die Herstellkosten durch ein geändertes Gehäuse deutlich gesenkt werden und dass darüber hinaus der Querschnitt deutlich verringert wird.

Die gestellte Aufgabe wird durch einen elektromotorischen Möbelantrieb mit den Merkmalen von Anspruch 1 gelöst. Ausgestaltungen und vorteilhafte Weiterbildungen finden sich in den abhängigen Ansprüchen.

Die Verwendung eines Profilschienenabschnittes bietet zahlreiche Vorteile. So ist eine Anpassung an unterschiedliche Achsabstände in einfachster Weise möglich, da die Antriebszüge dann nur in Längsrichtung der Profilschiene verschoben werden müssen. Sinngemäß ist man bei dem Einsatz eines solchen Möbelantriebes frei in der Auswahl des Achsabstandes. Auch die Längen der die Wellen verdrehenden Anlenkhebel sind variabel, das heißt, von der Form her und von der wirksamen Länge, so dass bei einer bestimmten vom Antriebszug aufgebrachten Druckkraft oder Schubkraft das Drehmoment verändert werden kann.

In der Antriebstechnik ist es zwar bekannt, dass die Gehäuse aus einem Metall, insbesondere aus einem gießfähigem Metall hergestellt werden. Auch für derartige Gehäuse sind entsprechende Formen notwendig, so dass die Verwendung eines gegossenen Gehäuses für Möbelantriebe nicht in Betracht kommt. Außerdem wäre es auch aus Gewichtsgründen nicht durchführbar. Es sind ferner teleskopierbare Hubsäulen bekannt, deren Teleskoprohre aus einem Metall, vorzugsweise aus Aluminium bestehen. Auch derartige Hubsäulen sind mit Möbelantrieben nicht vergleichbar, da sie so ausgelegt sind, dass sie höhere Lasten bewegen können und dass die Einschaltdauer gegenüber Möbelantrieben deutlich erhöht ist, so dass eine entsprechende Auslegung notwendig ist. Die in Rede stehende Möbelantriebe, deren maximalen Druckkräfte im Bereich von 7000 Newton liegen und die nur relativ kurzzeitig eingeschaltet werden dürfen, sind bislang ausschließlich mit Kunststoffgehäuse ausgestattet. In bevorzugter Ausführung ist vorgesehen, dass der Profilschienenabschnitt durch Ablängen von einer Stange gebildet ist, vorzugsweise von einer Stange mit einem genormten Querschnitt.

Die Verwendung von Profilschienenabschnitten bietet weitere Vorteile. Zunächst können derartige Profile in vielen Ausführungen der Querschnitte handelsüblich bezogen werden. Die Kosten für einen derartigen Profilschienenabschnitt sind gegenüber einem aus einem Kunststoff gefertigtem Gehäuse aufgrund der hohen Werkzeugkosten deutlich geringer. Außerdem handelt es sich um Werkstoffe mit einer hohen Festigkeit, insbesondere wenn der Profilschienenabschnitt aus Stahl besteht, so dass der Profilschienenabschnitt eine äußerst hohe Stabilität bei geringstmöglichen Abmessungen aufweist. Es ist auch möglich, dass der Profilschienenabschnitt als Fügeteil ausgebildet ist, indem er aus wenigstens zwei Profilabschnitten, beispielsweise durch Schweißung, zusammengesetzt ist. Der Profilschienenabschnitt könnte beispielsweise aus zwei Rohren bestehen, wobei ein Rohrende muffenartig aufgeweitet ist, so dass die Rohre ineinander gesteckt werden können. Im Bereich der Muffe ist ein Rohr oder es sind beide Rohre entsprechend ausgeklinkt, so dass ein Motor mit seinem Befestigungsflansch dort untergebracht werden kann. Hierbei könnte der Profilschienenabschnitt sowohl offene als auch geschlossene Querschnitte aufweisen. Der elektromotorische Antriebszug könnte beispielsweise teilweise oder vollständig in die Fügeebene eingebracht werden und durch Hinzufügen eines weiteren Profilschienenabschnittes gleichen oder ähnlichen Querschnittes festgelegt werden.

Aus den geringen Abmessungen ergeben sich auch geringere Abmessungen für die Anlenkhebel, so dass die Bauhöhe des Möbelantriebes reduziert wird. Dies wirkt sich besonders bei der Lagerung und auch beim Transport aus, da in einer gleichen Raumeinheit deutlich mehr Möbelantriebe gelagert werden können. Zur besseren Stapelbarkeit könnte der Möbelantrieb mit Stapelhilfselementen ausgestattet sein. Diese Stapelhilfselemente können an einzelnen Bauteilen an- oder aufgesetzt, angeformt oder durch Formgebung des Bauteils gebildet sein. So wäre es denkbar, dass zum Schutz des Antriebes beim Stapeln von damit ausgerüsteten Lattenrosten auf die Einhängeelemente Schutzkappen aus Kunststoff gestülpt werden.

Ferner ist vorteilhaft, dass die Auslegung des Möbelantriebes nicht mehr werkzeuggebunden ist, so dass auch Möbel mit den Möbelantrieben ausgerüstet werden können, deren Achsabstände von denen der gängigen Abstände abweichen. Um einen solchen Möbelantrieb herzustellen, sind die Investitionskosten deutlich geringer als wenn Kunststoffgehäuse verwendet werden. Die Zeit, die für die Entwicklung eines erfindungsgemäßen Möbelantriebes benötigt wird, ist deutlich geringer, als wenn dieser unter Verwendung eines Kunststoffgehäuses entwickelt wird. Ein weiterer Vorteil ist, dass die Außenflächen des Möbelantriebes in vielen Variationen angeboten werden können. So ist es möglich, dass die Flächen in verschiedenen Farben beschichtet oder bedruckt werden. Die Oberflächen können dadurch in einfachster Weise mit ansprechenden Motiven versehen werden. Ein weiterer Vorteil liegt darin, dass es sich bei Metall, insbesondere bei Stahl, um einen äußerst temperaturbeständigen Werkstoff handelt, dessen Festigkeit sich selbst bei einer Erwärmung nicht verändert. Außerdem handelt es sich um einen nicht brennbaren Werkstoff, so dass selbst im Falle einer zum Brand führenden Manipulation der Möbelantrieb nicht brennt. Insbesondere kommt ein magnetisierbares Material zum Einsatz, so dass es auch möglich ist, dass der zur Steuerung des Möbelantriebes notwendige Handschalter, insbesondere bei Nichtgebrauch, an das Gehäuse des Möbelantrieben angesetzt werden kann. Obwohl der Profilschienenabschnitt relativ dünnwandig sein kann, kann auf Stützrippen und ähnliche Verstärkungselemente verzichtet werden. Sofern es notwendig wird, können an den Profilschienenabschnitt notwendige Bauteile, beispielsweise Bolzen und dergleichen angeschweißt werden.

Der Profilschienenabschnitt hat vorzugsweise einen über die gesamte Länge gleichbleibenden Grundquerschnitt. Unter dem Grundquerschnitt ist die Ausgangsform des Profilschienenabschnittes zu verstehen, das heißt, es sind daran noch keine Bauteile angeschweißt oder Hinterschneidungen, Lochungen, Stanzungen oder Gewindeformungen vorgenommen worden. Da der Profilschienenabschnitt durchgehend ist, können an jeder Stelle Kräfte abgetragen werden. Es könnte zur Ableitung der Kräfte auch erforderlich werden, dass der Profilschienenabschnitt an definierten Stellen partiell verstärkt ist. Dies könnte beispielsweise durch eingebrachte Sicken, Einziehungen, Ausbeulungen und dergleichen erfolgen. Eine weitere Möglichkeit der Verstärkung wäre, wenn der Profilschienenabschnitt durch eine feste Verbindung oder durch feste Verbindungen mit einem Bauteil beziehungsweise mehreren Bauteilen verstärkt ist. Die Verstärkung kann auch durch Erhöhung der Wandstärke erfolgen. Ferner wäre es möglich, dass Verstärkungselemente am Profilschienenabschnitt festgelegt sind, beispielsweise durch Schweißung. Die Sicken verlaufen vorzugsweise in Längsrichtung des Profilschienenabschnittes. Die Verbindung mit einem Bauteil bietet sich an, indem der Profilschienenabschnitt beispielsweise mit einem Gehäuse fest verbunden ist. Die Verstärkung des Profilschienenabschnittes könnte auch noch durch fest auf die Endbereiche aufgesetzte Verschlussklappen erfolgen. Diese Verschlussklappen könnten allein oder auch als zusätzliche Maßnahme herangezogen werden.

Der Möbelantrieb sollte so ausgelegt sein, dass die Kräfte vollständig oder nahezu vollständig über den Profilschienenabschnitt ableitbar sind. Dadurch können die restlichen Bauteile entlastet werden, so dass die Abmessungen entsprechend gering sind.

Zur weiteren Vereinfachung ist noch vorgesehen, dass der Profilschienenabschnitt ein einstückiger Abschnitt ist und vorzugsweise, bezogen auf die vertikale Mittelebene, einen symmetrischen Querschnitt aufweist. Durch die Einstückigkeit entfällt außerdem das Zusammenfügen von einer oder mehreren Profilschienen. Jeder Antriebszug weist eine rotierend antreibbare Spindel auf, die fest, vorzugsweise einstückig mit einem sie antreibbaren Schneckenrad verbunden ist, welches ebenfalls Teil des Antriebszuges ist, und welches außerdem das Abtriebselement eines dem Antriebsmotor nachgeschalteten Drehzahlreduziergetriebes ist. Dieses Drehzahlreduziergetriebe ist dann der Schneckentrieb, bestehend aus einer Schneckenwelle, welche drehfest auf den Abtriebszapfen des Antriebsmotors aufgesetzt ist oder bei dem der Abtriebszapfen des Antriebsmotors als Schnecke ausgebildet ist. Diese Schnecke greift wiederum in die Verzahnung eines Schneckenrades ein. Das Schneckenrad selbst ist entweder mit der Spindel als einstückiges Formteil ausgebildet oder durch geeignete Fügeverfahren fest mit der Spindel verbunden.

Auf die rotierend antreibbare Spindel ist eine gegen Drehung gesicherte Spindelmutter aufgesetzt, die das Abtriebsglied des elektromotorischen Möbelantriebes bildet und direkt oder indirekt auf ein zu verstellendes Möbelbauteil wirkt. In dem Profilschienenabschnitt kann ein Antriebszug oder es können mehrere Antriebszüge darin angeordnet sein, wobei bei mehreren Antriebszügen diese in Reihe und/oder nebeneinander angeordnet sein können. Bei einem Doppelantrieb wirkt jede Spindelmutter auf einen Anlenkhebel, der fest mit der Lattenrostwelle des Rücken- beziehungsweise des Fußteiles verbunden ist. Da der Grundquerschnitt des Profilschienenabschnittes über seine Länge gleich bleibt, ist es möglich, dass der komplett vormontierte Antriebszug von der Stirnseite in den Profilschienenabschnitt einsetzbar ist. Dies erleichtert die Montage und somit verringern sich auch die Herstellkosten des elektromotorischen Möbelantriebes.

Ferner ist es auch möglich, dass durch Kaltverformung eine Formgebung erfolgt, beispielsweise Hinterschneidungen, Lochungen, Stanzungen, Gewindeformungen und dergleichen, die in die Wandungen gedrückt werden, um beispielsweise den Antriebszug form- und/oder kraftschlüssig festzusetzen. Bei den in Rede stehenden elektromotorischen Möbelantrieben werden die größten Kräfte in den Profilschienenabschnitt eingeleitet, wenn ein angeschlossenes Bauteil angehoben wird. Obwohl die einfachste Festlegung die Verwendung von Schrauben oder Nieten wäre, ist vorgesehen, dass jeder Antriebszug zur Ableitung der größten Kräfte sich an wenigstens einer durch Verformung des Profilschienenabschnittes gebildeten Fläche abstützt und dass die Sicherung in der entgegengesetzten Richtung durch mindestens ein Rastelement gegeben ist. Ein solches Rastelement ist vorzugsweise Teil des Antriebszuges. Es könnte als Rastzunge, Schnapphaken oder ähnliche Bauteile ausgebildet sein. Die durch Verformung gebildete Fläche beziehungsweise die durch Verformung gebildeten Flächen sollten jedoch eine solche Größe aufweisen, dass eine geringstmögliche Flächenpressung zwischen den sich einander berührenden Teilen gegeben ist.

Bei den bislang verwendeten Kunststoffgehäusen besteht dieses entweder aus einem kastenartigen Gehäuseteil und einem damit verschraubten Deckel oder das Gehäuse besteht aus zwei Gehäuseschalen. Durch die Verwendung des Profilschienenabschnittes können die Antriebszüge oder eine sonstige Getriebeeinheit von der Stirnseite her eingeschoben werden. Die in Rede stehenden Möbelantriebe sind mit einem sogenannten Getriebewinkel ausgestattet. Dieser kann aus zwei miteinander verschraubten Teilen bestehen. Sofern es sich um einen Doppelantrieb mit zwei voneinander getrennten Antriebszügen handelt, kommen zwei Getriebewinkel zum Einsatz. Der Getriebewinkel wird zur Lagerung der Spindel und des Schneckenrades verwendet. Dieser Getriebewinkel entspricht der Innenkontur des Profilschienenabschnittes, so dass zumindest der Getriebewinkel schließend und gegebenenfalls formschlüssig darin einsetzbar ist. Dadurch ist es möglich, dass der Antriebszug in einfachster Weise lagegerecht fixiert wird. Der Getriebewinkel sollte spielfrei, ohne mit geringstmöglichem Spiel in den Profilschienenabschnitt einschiebbar sein.

Die Profilschienenabschnitte können die unterschiedlichsten Querschnittsformen aufweisen. Besonders vorteilhaft ist es jedoch, wenn die Profilschienenabschnitte einen geschlossenen Querschnitt aufweisen, da dann die Antriebselemente optimal geschützt sind. Der in frage kommende elektromotorische Möbelantrieb wird nicht nur im Haushaltsbereich eingesetzt, sondern auch in Krankenhäusern und in Pflegeheimen. Bei solchen Anwendungsfällen ist es notwendig, dass der Möbelantrieb feuchtigkeitsdicht ist. Es bietet sich dann ein Profilschienenabschnitt mit einem geschlossenen Querschnitt an. Dieses Profil bietet die maximale Verwindungssteifheit. Es können jedoch auch Profilschienenabschnitte mit C-förmigen Querschnitten verwendet werden. Der Schlitz bietet dann einen Freiraum für den Anlenkhebel. Es können jedoch auch Profilschienenabschnitte mit U-förmigen Querschnitten verwendet werden, wobei dann die offene Seite zum Möbel zeigt, so dass auch für die Anlenkhebel ein Freiraum gegeben ist. Bei der Verwendung von einseitig offenen Profilen muss für die Fixierung der Antriebszüge Rechnung getragen werden. Es ist deshalb auch vorteilhaft, wenn die Profilschienenabschnitte zwar U-förmige Querschnitte, jedoch asymmetrische Querschnitte aufweisen, so dass einer der beiden parallelen Schenkel eine größere Höhe aufweist und dieser Schenkel mindestens einmal abgewinkelt ist. Beim zweimaligen Abwinkeln entsteht in vorteilhafter Weise ein nutartiger Führungskanal, in dem beispielsweise die Spindelmutter geführt werden kann. Es ist außerdem möglich, dass bei Verwendung von Profilschienenabschnitten mit U-förmigen Querschnitten die freien Ränder der parallelen Schenkel U-förmig verformt sind, wobei die offenen Seiten nach außen zeigen beziehungsweise an den aneinander abgewandten Seiten liegen. Es ist deshalb möglich, dass ein Deckel oder ein sonstiges Verschlusselement an den Randbereich formschlüssig festgelegt wird. Dazu wäre beispielsweise ein Deckel oder ein Verschlusselement mit einem C-förmigen Querschnitt geeignet. In diesen Deckel könnten beispielsweise Schaltelemente, insbesondere Endschalter zur Begrenzung der Endstellungen der Spindelmuttern installiert sein.

Die Einhängeelemente könnten verschiedenartig gestaltet sein. So ist noch vorgesehen, dass jedes Einhängeelement U-förmig ausgebildet ist, wobei in den parallelen Schenkeln halbkreisförmige oder U-förmige Ausnehmungen vorgesehen sind, die die Wellen von Möbeln umgreifen. Eine über diese Schenkel gestülpte Kappe aus einem geeigneten Werkstoff, beispielsweise aus einem Kunststoff, könnte als Versteifung des Einhängeelementes oder auch als Gleitlager zur Lagerung der jeweiligen Welle fest mit dem U-förmigen Einhängeelement verbunden sein.

Es muss nun sichergestellt sein, dass der elektromotorische Möbelantrieb beispielsweise an den Wellen eines Lattenrostes festgelegt werden kann. Es ist deshalb vorgesehen, dass der Profilschienenabschnitt mit lagegerecht angeordneten Einhängeelementen ausgestattet ist. Diese Einhängeelemente können verschiedenartig gestaltet sein. So ist beispielsweise vorgesehen, dass jedes Einhängeelement aus zwei schwenkbar am Profilschienenabschnitt gelagerte Einhänghaken besteht, die derart gestaltet sind, dass die Welle um einen Winkel umgriffen ist, der vorzugsweise größer als 180° Grad ist. Die Einhängelemente sind so gestaltet, dass der Anlenkhebel auch noch lage- und funktionsgerecht zur Spindelmutter stehen kann. Einer der Einhängehaken könnte beispielsweise fest am Profilschienenabschnitt angebracht sein, während der andere Einhängehaken schwenkbar gelagert ist. Dieser beweglich gelagerte Einhängehaken könnte zur Sicherung in seiner Betriebstellung verriegelbar sein. Dies erfolgt beispielsweise durch eine schwenkbare Verriegelungslasche, deren Schwenkachse parallel und im Abstand zur Drehachse des Einhängehakens steht. Der Vorteil dieser Einhängehaken liegt darin, dass zum Anhängen des Möbelantriebes an ein Lattenrost keine Werkzeuge benötigt werden. Alternativ ist es jedoch auch denkbar, dass der Anlenkhebel an dem der Kontaktfläche mit der Spindelmutter abgewandten Bereich mit einer Durchbrechung versehen ist, durch die der schwenkbar gelagerte Einhängehaken geführt ist. Die Lösung mit den Einhängehaken ist besonders dann sinnvoll, wenn ein Lattenrost nachträglich mit einem Möbelantrieb ausgerüstet werden soll.

Wird jedoch das Lattenrost von vornherein mit einem Möbelantrieb ausgerüstet, können einfachere und preiswertere Lösungen eingesetzt werden. So ist es beispielsweise möglich, dass der Profilschienenabschnitt zwei Ausleger aufweist. Diese Ausleger haben im freien Endbereich zwei von den einander zugewandten Flächen ausgehende U-förmige Ausnehmungen, in denen die Wellen liegen. Diese Ausleger können hergestellt werden, indem entsprechende Profilabschnitte an dem Profilschienenabschnitt beispielsweise durch Schweißung befestigt sind. Sie können jedoch auch durch Ausklinken von zwei parallel und im Abstand zueinander stehenden Wandungen des Profilschienenabschnittes gebildet werden. Die Ausnehmungen in den Auslegern können sich auch von der oberen, dem Profilschienenabschnitt abgewandten Fläche erstrecken. Es sind dann zusätzliche Sicherungselemente notwendig. Ferner ist es auch durchführbar, dass der Profilschienenabschnitt mit zwei im Abstand zueinander verlaufende Bohrungen versehen ist, durch die die Wellen geführt sind. Dieser Abstand entspricht dem Abstand der Wellen. Es ist weiterhin möglich, dass der Profilschienenabschnitt mit zwei Aussparungen für die Wellen versehen ist. Die Sicherung könnte beispielsweise durch ein Sicherungsband erfolgen, welches über den Profilschienenabschnitt gezogen und daran befestigt wird. Ferner ist es auch denkbar, dass an dem Profilschienenabschnitt Laschen, beispielsweise durch Schrauben oder Niete befestigt werden, die mit Bohrungen für die Wellen versehen sind. Diese Ausführung bietet den Vorteil, dass bei der Montage eines Lattenrostes nur die Laschen auf die Wellen gesteckt werden müssen und dass im Nachhinein die Verbindung mit dem Profilschienenabschnitt erfolgt. Der Profilschienenabschnitt kann vollständig aus einem Nichtmetall, beispielsweise aus einem Kunststoff, gefertigt sein. Eine solche Ausführung ist möglich, wenn die auftretenden Kräfte verhältnismäßig gering sind. Auch andere Werkstoffe können verwendet werden. So besteht die Möglichkeit, auch Verbundwerkstoffe oder Werkstoffkombinationen einzusetzen. Ein Verbundwerkstoff könnte beispielsweise eine Kombination aus Aluminium und Kunststoff sein. Es ist jedoch auch möglich, dass der Profilschienenabschnitt zumindest abschnittsweise aus Kunststoff besteht. In den Abschnitten mit einer höheren mechanischen Belastung könnten Teile aus einem Werkstoff mit höherer Festigkeit, beispielsweise aus einem Metall, eingebettet sein, um den Profilschienenabschnitt entsprechend zu verstärken.

Es kann auch ein Profilschienenabschnitt verwendet werden, der in seiner Grundkontur U-förmig gestaltet ist, wobei die freien Randbereiche der sich gegenüberliegenden Schenkel abgewinkelt und aufeinander zu gerichtet sind, und dass die Abwinklung scharfkantig oder in einem Radius verläuft. Der eingeschlossene Winkel ist jedoch ein stumpfer Winkel beziehungsweise der von der gedachten Verlängerung des Schenkels und der Abwinklung eingeschlossene Winkel ist ein spitzer Winkel. Der elektromotorische Möbelantrieb sollte besonders montagefreundlich sein, es ist deshalb vorgesehen, dass der Auslegung zur Verschwenkbarkeit während der Montage drehbar am Profilschienenabschnitt gelagert ist. Jeder Ausleger sollte jedoch in der Blockierstellung mittels eines Blockierelements verriegelbar sein. Alternativ können die Ausleger auch an den Profilschienenabschnitt ansteckbar sein. Die Stirnenden des Profilschienenabschnittes können, wie bereits erwähnt, durch Endkappen verschließbar sein. Diese können formund/oder kraftschlüssig mit den Endbereichen verbunden sein, sie können jedoch auch durch Schweißung, Klebung oder dergleichen gesichert sein. Ferner ist noch eine montagefreundliche Ausführung, wenn die Platine zur Steuerung des Möbelantriebes innerhalb des Getriebegehäuses angeordnet ist. Um die Montage so einfach wie möglich zu machen, ist vorgesehen, dass vorzugsweise am Getriebehebel Raststege zum Anrasten einer Platine angeformt sind. Die Platine sollte mit Steckkontakten ausgerüstet sein, so dass ebenfalls in einfachster Weise die elektrische Verbindung mit den elektrischen und/oder elektronischen Bauteilen hergestellt werden kann. Zur einfachen Halterung einer Steuerplatine ist es zweckmäßig, wenn der Getriebewinkel mit Konturen beispielsweise Nuten versehen ist, die die Steuerplatine aufnehmen.

Jeder Antriebsmotor ist zweckmäßigerweise als Antriebsgetriebemotor ausgebildet, da sich zur Reduzierung der Drehzahl der antreibbaren Spindel dadurch ein kompakter Antrieb ergibt. Das Getriebe des Antriebsgetriebemotors kann verschiedenartig ausgelegt sein. Dabei können sich die Wellen kreuzen oder parallel zueinander stehen. Bei sich kreuzenden Wellen wird bevorzugt ein Schneckentrieb verwendet, während bei parallelen Wellen eine Räderkette eingesetzt wird. Alternativ ist es jedoch auch möglich, dass als Antriebsgetriebemotor ein Stabantrieb verwendet wird, wobei das Getriebe dann vorzugsweise ein Planetengetriebe ist. Die Zentralachse der Gewindespindel fällt dann mit der Drehachse des Rotors des Antriebsmotors zusammen. Bei dieser Ausführung bietet es sich an, dass der Profilschienenabschnitt aus einem Rohr gebildet ist. Der Querschnitt ist dann kreisringförmig. Der Profilschienenabschnitt hat in bevorzugter Ausführung einen über seine Länge gleichbleibenden Grundquerschnitt, wobei unter den Grundquerschnitt der noch nicht bearbeitete Rohling zu verstehen ist. Es ist jedoch auch möglich, dass sich in Anpassung an die darin angeordneten Bauteile der Querschnitt über die Länge ändert. Der Profilschienenabschnitt besteht in bevorzugter Ausführung aus einem metallischen Werkstoff, beispielsweise aus Stahl. Es ist jedoch auch denkbar, dass dieser aus Holz, einem holzartigen Werkstoff oder aus einem Kunststoff gefertigt ist. Jede Spindel des elektromotorischen Möbelantriebes kann rotierend angetrieben werden. Es ist jedoch alternativ auch möglich, dass jede Spindel sich in seiner Längsrichtung gegenüber dem Getriebe des Antriebsgetriebemotors verschiebt. Dies wäre beispielsweise möglich, wenn das Getriebe ein Schneckentrieb ist, und das Schneckenrad mit einer Innengewindebohrung versehen ist. Die Spindel müßte dann gegen Drehung gesichert sein, wobei der Möbelantrieb so ausgelegt sein kann, dass jede Spindel zur Verstellung des angekoppelten Möbelbauteiles als Schubelement oder auch als Zugelement wirkt.

Anhand der beiliegenden Zeichnungen wird die Erfindung noch näher erläutert.

Es zeigen:
- Figur 1: einen erfindungsgemäßen Möbelantrieb in Form eines Doppelantriebes in einer aufgeschnitten Ansicht,
- Figur 2: den Endbereich eines Möbelantriebes nach der Figur 1 in einer perspektivischen Darstellung,
- Figuren 3 bis 9: verschiedene Querschnittsformen der Profilschienenabschnitte,
- Figuren 10 bis 13: verschiedene Möglichkeiten der Anbringung eines Möbelantriebes an den Wellen eines Lattenrostes, rein schematisch,
- Figuren 14 und 15: zwei weitere Möglichkeiten der Anbringung des Möbelantriebes an den Wellen eines Lattenrostes, rein schematisch,
- Figur 16: eine weitere Querschnittsform des Profilschienenabschnittes,
- Figuren 17 bis 19: eine mehrteilige Spindelmutter in drei verschiedenen Darstellungen,
- Figuren 20 bis 23: eine zweiteilige Spindelmutter in drei verschiedenen Ansichten und einer Schnittdarstellung und
- Figuren 24 und 25: eine als einstückiger Körper ausgebildete Spindelmutter.

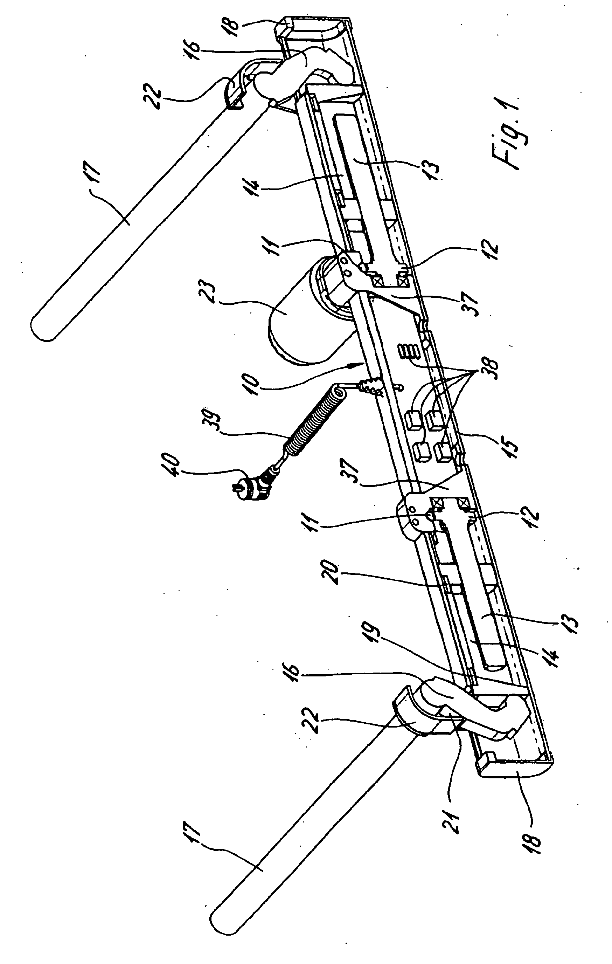

In der Figur 1 ist ein Möbelantrieb 10 in Form eines Doppelantriebes dargestellt. Er ist mit zwei Schnecken 11 ausgestattet, die von den Antriebsmotoren 23 angetrieben werden. Bei der dargestellten Ausführung sind zwei Antriebsmotore 23 notwendig, wobei jedoch aus Darstellungsgründen nur einer dargestellt ist. Entgegen der Ausführung könnten auch beide Spindeln 13 von einem Antriebsmotor angetrieben werden, wobei die Verbindung dann durch Kupplungselemente erfolgen sollte. Jede Schnecke steht mit einem Schneckenrad 12 in Eingriff. Jedes Schneckenrad 12 ist entweder drehfest mit der antreibbaren Spindel 13 verbunden, oder das Schneckenrad 12 und die Spindel 13 sind ein einstückiges Formteil, welches vorzugsweise aus einem Kunststoff gefertigt ist. Auf jede Spindel 13 ist eine Spindelmutter 14 aufgesetzt, die unverdrehbar ist. Beide Spindelmuttern 14 sind in einem Profilschienenabschnitt 15 geführt, der vorzugsweise aus Stahl besteht. Die beiden Spindeln 13 sind spiegelbildlich zueinander montiert, fluchten jedoch miteinander.

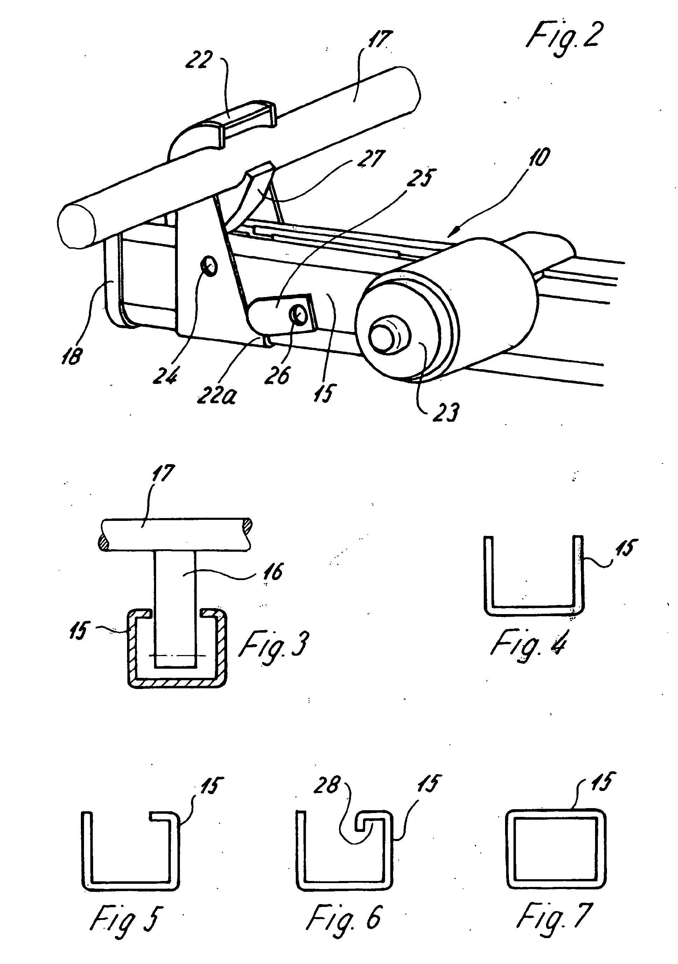

Auf das freie Ende jeder Spindelmutter 14 wirkt ein Anlenkhebel 16, der drehfest auf eine Welle 17 eines Lattenrostes aufgesetzt ist. Aus der Figur 1 ergibt sich, dass die jeweilige Welle 17 im oder entgegen dem Uhrzeigersinn geschwenkt wird, wenn sich die Spindel 13 derart dreht, dass die Spindelmutter 14 auf das zugeordnete Stirnende des Profilschienenabschnittes 15 verfahren wird. Bei Drehung der Spindel 13 in der entgegengesetzten Richtung wird die Welle 17 durch das Eigengewicht des angeschlossenen Möbelbauteiles gedreht. Dadurch besteht ständig ein Kontakt zwischen der Stirnfläche der Spindelmutter 14 und der Berührungsfläche des Anlenkhebels 16. Die Querschnitte des Profilschienenabschnittes 15 werden noch anhand der Figuren 3 bis 9 und 16 erläutert. Der Profilschienenabschnitt 15 bildet im Zusammenhang mit einer stirnseitig aufgestülpten Endkappe 18 das Gehäuse des elektromotorischen Möbelantriebes 10. Die Endstellungen der Spindelmutter 14 können durch zwei Endschalter 19, 20 begrenzt werden. Der Anlenkhebel 16 ist an dem der Kontaktfläche mit der Spindelmutter 14 abgewandten Bereich mit einer Durchbrechung 21 versehen, durch die ein schwenkbarer, in der Figur 2 genauer dargestelltes Einhängeelement22 geführt ist. Die Ausführung kann auch umgekehrt sein.

Die Figur 2 zeigt, dass der aus der Spindel 13 und der Spindelmutter 14 und ggf. dem Schneckenrad 12 gebildete Antriebszug von einer Schnecke 11 und einem Antriebsmotor 23 antreibbar ist, der an einer Wandung des Profilschienenabschnittes 15 liegt. Das Einhängeelement 22 ist um eine Achse 24 schwenkbar am Profilschienenabschnitt 15 gelagert. Der Endbereich ist so gestaltet, dass er in der in der Figur 2 dargestellten Betriebsstellung die Welle 17 eines Möbels, beispielsweise eines Lattenrostes um einen Winkel umgreift, der im Bereich von 180° Grad liegen kann. An dem der Welle 17 abgewandten Ende hat der Einhängelement 22 eine bogenförmig verlaufende Rastnase 22a, die im dargestellten Ausführungsbeispiel dem Antriebsmotor 23 zugewandt liegt. Am Profilschienenabschnitt 15 ist außerdem noch eine Sicherungslasche 25 schwenkbar gelagert. Diese Sicherungslasche 25 ist um eine Achse 26 schwenkbar. Das der Schwenkachse 26 abgewandte Ende ist halbkreisförmig gestaltet und kontaktiert über einen bestimmten Bereich die Rastnase 22a. Dadurch findet eine Blockierung beziehungsweise Verrastung des Einhängelements 22 statt. Es ergibt sich aus der Figur 2, dass der Einhängelement 22 gemäß der Darstellung entgegen oder im Uhrzeigersinn geschwenkt werden kann, wenn die Sicherungslasche 25 in der entgegengesetzten Richtung bewegt wird. Am Profilschienenabschnitt 15 ist noch ein weiteres Einhängelement 27 fest angesetzt, das jedoch auch schwenkbar gelagert sein könnte und ebenfalls arretierbar ist. Dieses Einhängelement 27 ist so gestaltet, dass die beiden Einhängelemente 22 und 27 die Welle 17 um einen Winkel umgreifen, der größer als 180° Grad sein kann, so dass der elektromotorische Möbelantrieb 10 fest an den beiden Wellen 17 angesetzt ist. Es ergibt sich, dass er jederzeit in einfachster Weise ohne Werkzeuge abnehmbar ist.

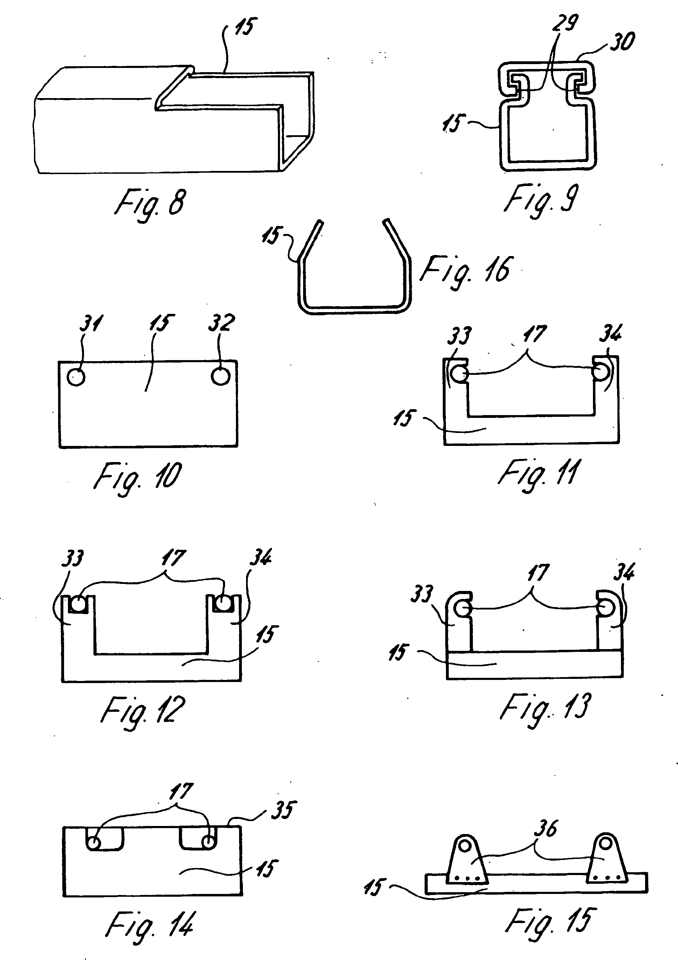

Die Figuren 3 bis 9 zeigen verschiedene Querschnitte für die Profilschienenabschnitte 15, die jedoch beispielhaft zu sehen sind. So zeigt die Figur 3 einen Profilschienenabschnitt mit einem C-förmigen Querschnitt. Durch den oberen Längsschlitz erstreckt sich der Anlenkhebel 16. Aus Gründen der vereinfachten Darstellung ist das Einhängelement 22 nicht dargestellt. Das C-Profil bietet den Vorteil, dass die kurzen, den Längsschlitz begrenzenden Stege als Halterung für den Antriebszug genutzt werden können. Die Ausführung nach der Figur 4 zeigt einen U-förmigen Querschnitt. Hier sind jedoch zusätzliche Mittel notwendig, um die Antriebszüge zu fixieren. Bei der Ausführung nach der Figur 5 ist die Grundform des Querschnittes wiederum U-förmig, jedoch ist ein Bereich der parallelen Schenkel abgewinkelt. Dadurch wird wiederum eine Halterung für die Antriebszüge geschaffen. Bei der Ausführung nach der Figur 6 ist einer der parallelen Schenkel mit seinem freien Endbereich zweimal abgewinkelt, so dass ein nutartiger Führungskanal 28 besteht. Bei der Ausführung nach der Figur 7 wird ein geschlossenes Profil 15 verwendet mit dem Vorteil, dass die Antriebszüge rundum gesichert sind. An den entsprechenden Stellen können die Wandungen mit Öffnungen versehen sein, um den Schneckentrieb hindurchzuführen. Die Ausführung nach der Figur 8 ist im Prinzip ebenfalls ein geschlossenes Profil, welches jedoch im Endbereich U-förmig gestaltet ist, indem eine Wandung ausgeklinkt wurde. Diese Ausführung ist insbesondere für einen Einzelantrieb geeignet. Die Ausführung nach der Figur 9 zeigt schließlich ebenfalls einen Profilschienenabschnitt 15 mit einem U-förmigen Querschnitt, wobei jedoch die Endbereiche der parallelen Schenkel dreimal abgewinkelt sind, so dass an den Außenseiten zwei Rastnuten 29 entstanden sind. Diese Rastnuten 29 dienen zur Festlegung einer Abdeckkappe 30, die im dargestellten Ausführungsbeispiel einen C-förmigen Querschnitt hat. In nicht dargestellter Weise können in diese Abdeckkappe 30 die die Endstellungen der Spindelmutter 14 begrenzenden Endschalter angeordnet sein. Während der Profilschienenabschnitt 15 bei dieser Ausführung auch aus Metall hergestellt ist, könnte die Abdeckkappe 30 aus einem Kunststoff bestehen. Es könnte jedoch auch ein genormtes C-Profil aus Metall verwendet werden.

Die Figuren 10 bis 15 zeigen weitere Möglichkeiten der Festlegung des elektromotorischen Möbelantriebes 10 an zwei Wellen eines Möbels, vorzugsweise eines Lattenrostes. Die Ausführungen sind besonders geeignet, wenn im Zuge der Montage eines Lattenrostes der elektromotorische Möbelantrieb 10 montiert wird. Bei der Ausführung nach der Figur 10 ist der Profilschienenabschnitt 15 mit zwei Bohrungen 31, 32 versehen, die sich durch zwei parallel und im Abstand zueinander stehende Wandungen erstrecken. Der komplett montierte elektromotorische Möbelantrieb 10 wird dann auf die Wellen 17 des Lattenrostes gesteckt, welche anschließend montiert werden. Bei der Ausführung nach den Figuren 11 und 13 sind an dem Profilschienenabschnitt 15 Einhängeelement 33, 34 angesetzt, die an den aneinander zugewandten Seiten U-förmige oder halbkreisförmige Ausnehmungen aufweisen, in die die Wellen 17 eingreifen. In materialsparender Weise sind die Einhängeelement 33, 34 bei der Ausführung nach der Figur 13 mit dem Profilschienenabschnitt 15 fest verbunden, vorzugsweise durch Schweißung. Bei der Ausführung nach der Figur 11 sind zwei parallel und im Abstand zueinander stehende Wandungen ausgeklinkt. Gleiches gilt auch für die Ausführung nach der Figur 12, wobei jedoch die U-förmigen Ausnehmungen sich von den oberen Stirnflächen aus erstrecken. Bei dieser Ausführung wären zusätzliche Sicherungselemente zur Fixierung des elektromotorischen Möbelantriebes 10 am Möbel notwendig. Bei dieser Ausführung ist auch eine nachträgliche Ausrüstung eines Möbels mit einem elektromotorischen Möbelantrieb 10 möglich. Bei der Ausführung nach der Figur 14 ist der Profilschienenabschnitt 15 mit etwa rechteckförmigen Ausnehmungen versehen, die in zwei parallel und im Abstand zueinander stehenden Wandungen vorgesehen sind. Diese Ausführung ist auch zum nachträglichen Anbau geeignet, da ein Spannelement 35 über den Profilschienenabschnitt 15 gezogen ist. Dieses Spannelement 35 könnte auch als Abdeckkappe gestaltet sein. Schließlich zeigt die Figur 15 noch eine Ausführung, bei der auf die Wellen des Möbels zwei Haltelaschen 36 gesteckt werden. Nach der Montage des Möbels ist es dann möglich, den elektromotorischen Möbelantrieb 10 mit dem Profilschienenabschnitt 15 mit den Laschen 36 zu verbinden. Dies kann beispielsweise durch Nieten oder Schrauben erfolgen.

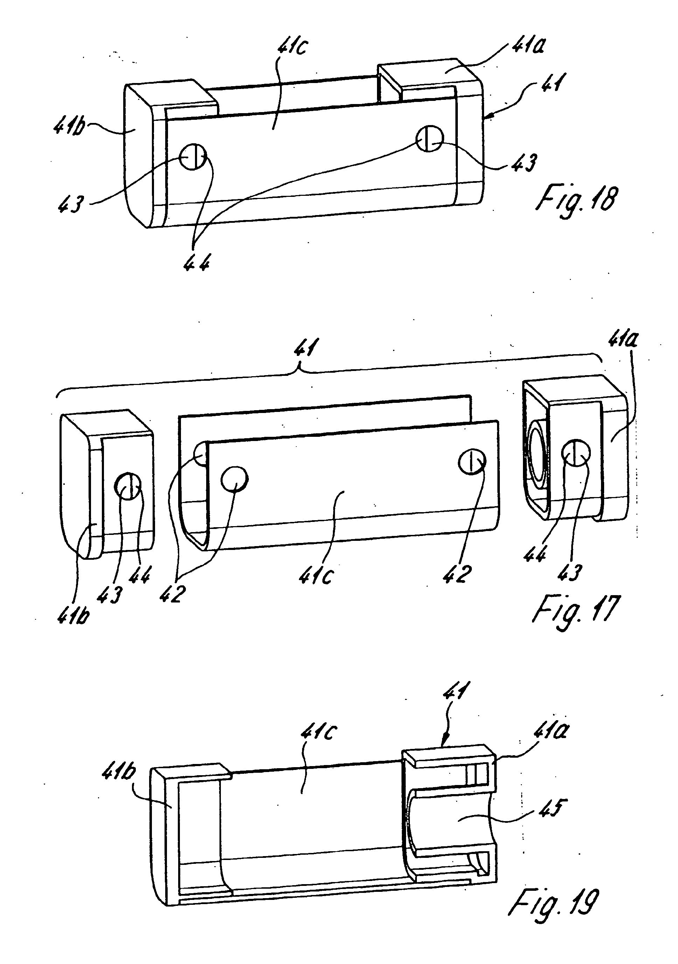

Die Figur 16 zeigt noch einen weiteren Querschnitt des Profilschienenabschnittes 15. Dieser ist in seiner Grundkontur U-förmig, so dass ein genormtes Profil verwendet werden könnte. Die oberen Enden der sich gegenüberliegenden Schenkel sind abgewinkelt und aufeinander zu gerichtet, so dass die obere Öffnung verringert wird. Der von dem nicht abgewinkelten Teil und dem abgewinkelten Teil eingeschlossene Winkel liegt unter 180°, jedoch deutlich über 90°. Ein derartiges Profil könnte jedoch auch durch Kaltverformung eines Zuschnittes hergestellt sein. Bei den gesamten Profilschienenabschnitten 15 sind evtl. Hinterschneidungen, Gewindeformungen, Lochungen oder sonstige durch Kaltverformung hergestellte Teile nicht dargestellt. Die Figur 1 zeigt noch, dass jedem Antriebszug 12, 13, 14 ein Getriebewinkel 37 zugeordnet ist. Dieser klotzartige Getriebewinkel wird so genannt, da er zwei rechtwinklig zueinander stehende Flächen aufweist. Jeder Getriebewinkel dient der Lagerung der das Schneckenrad 12 tragenden Spindel 13 und der Festlegung des zugeordneten Antriebsmotors 23. Wenigstens einer der Getriebewinkel 37 ist mit einem Steg zum Anstecken einer Steuerplatine ausgerüstet. Die Steuerplatine ist mit Steckkontakten ausgestattet, so dass die elektrische Verbindung zu den elektrischen beziehungsweise elektronischen Bauteilen in einfachster Weise montagefreundlich herstellbar ist. Die elektrischen beziehungsweise elektronischen Bauteile sind andeutungsweise durch die Klötze und Stäbe 38 angedeutet. Die Stromzuführung erfolgt über ein Kabel 39 mit einem Stecker 40. In diesen Stecker 40 kann jedoch auch ein Transformator integriert sein. Außerdem könnte der Transformator in einer Steckdose angeordnet sein, wobei der Stecker dann in den Abgang des Transformators gesteckt wird.

In den Figuren 17 bis 19 ist eine mehrteilige Spindelmutter 41 dargestellt, die im dargestellten Ausführungsbeispiel aus drei miteinander verrasteten Einzelteilen besteht. Sie wird aus einem aus Kunststoff bestehenden Innengewindekörper 41a, einem dem Innengewindekörper 41a gegenüberliegenden, aus Kunststoff gefertigten Druckstück 41b und einem aus Metall bestehenden Mittelteil 41c gebildet. Der Innengewindekörper 41 a steht mit seinen Gewindegängen mit einer nicht dargestellten Gewindespindel in Eingriff. Die Länge des Mittelteiles 41c kann variiert werden, so dass die jeweils benötigte Länge der Spindelmutter 71 problemlos hergestellt werden kann. Das Mittelteil 41c kann durch Ablängen von einer Stange hergestellt werden. Im Querschnitt, das heißt, rechtwinklig zur nicht dargestellten Gewindespindel beziehungsweise zur Mittellängsachse der Innengewindebohrung des Innengewindekörpers 41a ist das Mittelteil U-förmig gestaltet. Der Innengewindekörper 41a und das Druckstück 41b werden in die Endbereiche des Mittelteils 41c eingeschoben. Die Begrenzung erfolgt durch Endanschläge in den äußeren Enden des Innengewindekörpers 41 a und des Druckstückes 41 b. In den Endbereichen des Mittelteils 41c sind in jedem der parallelen Schenkel Rastlöcher 42 vorgesehen, die beispielsweise durch Stanzung eingebracht wurden. Lagegerecht dazu sind an dem Innengewindekörper 41 a und dem Druckstück 41b Rastzapfen 43 angeformt, die an den einander zugewandten Seiten mit Einführschrägflächen 44 ausgestattet sind. Die Innengewindebohrung 45 des Innengewindekörpers 41a ist besonders in der Schnittdarstellung der Figur 19 erkennbar.

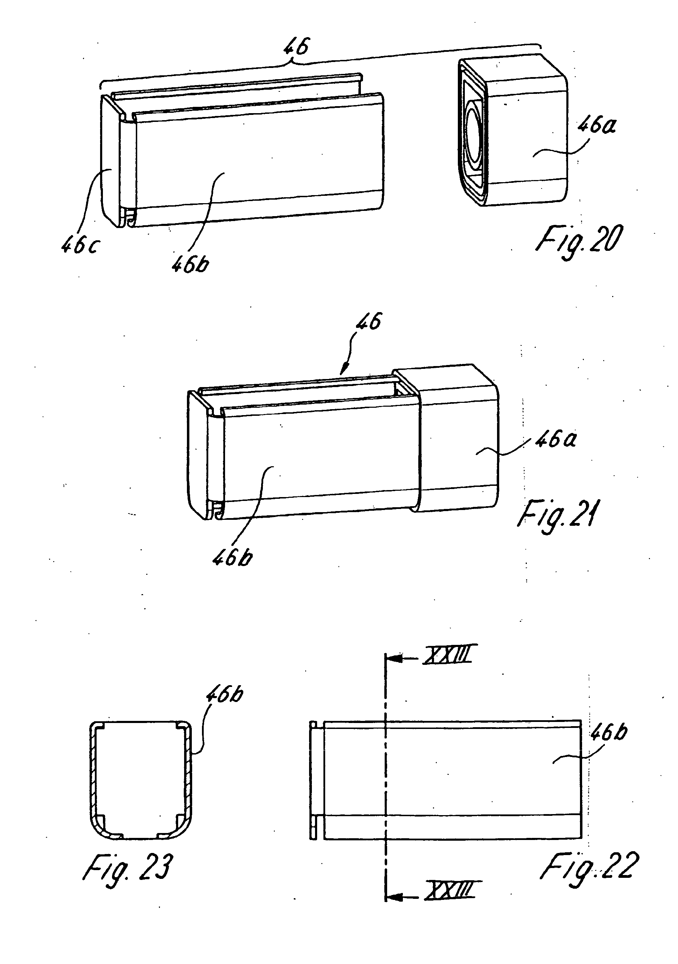

Die Ausführung gemäß den Figuren 20 bis 23 zeigt eine Spindelmutter 46 in einer zweiteiligen Ausführung. Sie besteht aus einem aus einem Kunststoff gefertigten Innengewindekörper 46a und einem aus Metall bestehenden Druckstück 46b. Dieses Druckstück 46b ist durch Kaltverformung eines Blechzuschnittes geformt. Es ist so geformt, dass an der dem Innengewindekörper 46a abgewandten Seite eine eine äußere Druckfläche bildende Platte 46c steht. Die Druckfläche kann mit einem geeigneten Gleitmaterial beschichtet sein, um Geräusche beim Betrieb des Möbelantriebes zu vermeiden, da der mit der Druckfläche zusammenwirkende Anlenkhebel auch aus Metall bestehen kann. Im Querschnitt, das heißt, in einem Schnitt rechtwinklig zur Mittellängsachse des Innengewindes des Innengewindekörpers 46a hat das Druckstück 46b zwei parallel zueinanderstehende Wandungen und demzufolge auch zwei sich gegenüberliegende Schlitze. Die oberen und unteren Ränder der beiden Wandungen sind abgewinkelt beziehungsweise abgerundet, wobei diese Stege aufeinander zugerichtet sind. Die Verbindung des Innengewindekörpers 46a mit dem Druckstück 46b erfolgt kraftschlüssig, da der zugeordnete Endbereich des Druckstückes 46b in entsprechend gestaltete Ausnehmungen des Innengewindekörpers 46a eingreift. Die Festlegung könnte auch durch ein Verspannen oder Verklemmen erfolgen. Auch eine Rastverbindung ist möglich. Dies erfolgt wiederum durch Rastbohrungen und Rastzapfen.

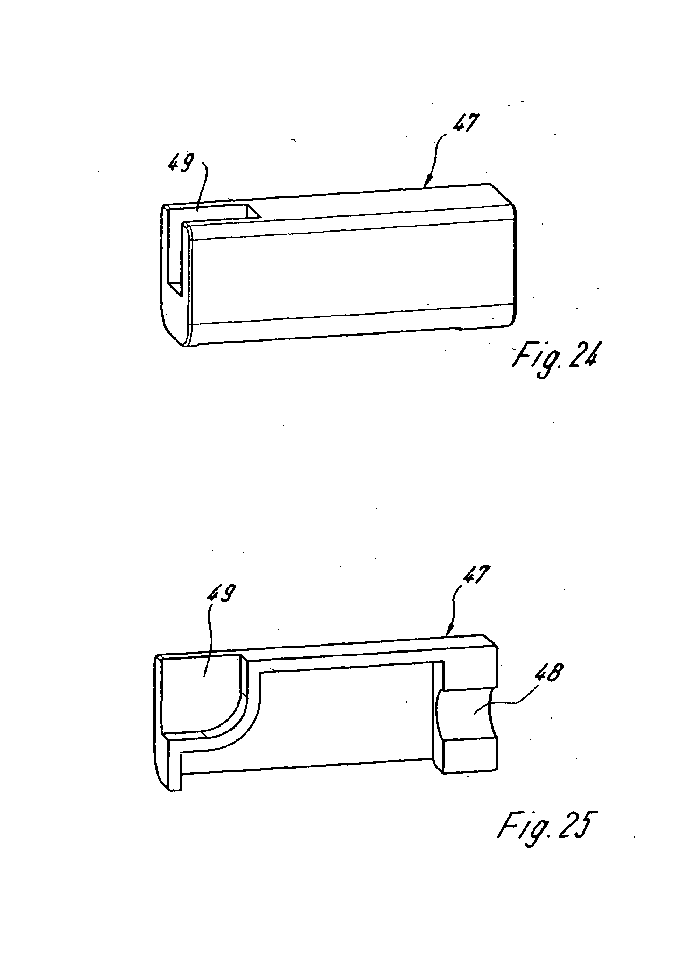

In den Figuren 24 und 25 ist eine Spindelmutter 47 dargestellt, deren mittlerer Bereich nach unten gemäß der Darstellung offen und aus einem Kunststoff gefertigt ist. Außer der durch das Innengewinde 48 für die nicht dargestellte Gewindespindel gebildete Öffnung ist diese Spindelmutter 47 außenseitig geschlossen. Im dargestellten Ausführungsbeispiel ist sie an der dem Innengewinde 48 abgewandten Seite mit einer Ausnehmung 49 versehen, die etwa viertelkreisförmig gestaltet ist. Diese Ausnehmung 49 wird an der dem Innengewinde 48 zugewandten Seite durch einen Steg begrenzt. In diese Ausnehmung 49 ragt bei dem Möbelantrieb ein eine Verstellung eines Möbelbauteiles bewirkendes Koppelelement. Entgegen der Darstellung ist es jedoch auch möglich, dass die Ausnehmung 49 entfällt, so dass das Koppelelement beziehungsweise der Anlenkhebel an der dem Innengewinde 48 gegenüberliegenden Fläche anliegt.
Die Erfindung ist nicht auf die dargestellten Ausführungsbeispiele beschränkt. Wesentlich ist, dass das von außen sichtbare, designgebende Gehäuse des elektromotorischen Möbelantriebes 10 durch wenigstens einen metallischen oder nichtmetallischen Profilschienenabschnitt 15, vorzugsweise mit genormtem Querschnitt und den stirnseitigen Endkappen 18 gebildet ist.

### Bezugszeichenliste

- 10: Möbelantrieb
- 11: Schnecken
- 12: Schneckenrad
- 13: Spindel
- 14: Spindelmutter
- 15: Profilschienenabschnitt
- 16: Anlenkhebel
- 17: Welle
- 18: Endkappe
- 19: Endschalter
- 20: Endschalter
- 21: Durchbrechung
- 22: Einhängeelement
- 22a: Rastnase
- 23: Antriebsmotor
- 24: Achse
- 25: Sicherungslasche
- 26: Achse
- 27: Einhängeelement
- 28: Führungskanal
- 29: Rastnut
- 30: Abdeckkappe
- 31: Bohrung
- 32: Bohrung
- 33: Einhängeelement
- 34: Einhängeelement
- 35: Spannelement
- 36: Lasche
- 37: Getriebewinkel
- 38: Stab
- 39: Kabel
- 40: Stecker
- 41: Spindelmutter
- 41a: Innengewindekörper
- 41b: Druckstück
- 41c: Mittelteil
- 42: Rastbohrung
- 43: Rastzapfen
- 44: Einführschrägfläche
- 45: Innengewinde
- 46: Spindelmutter
- 46a: Innengewindekörper
- 46b: Druckstück
- 46c: Platte
- 47: Spindelmutter
- 48: Innengewinde
- 49: Ausnehmung

## Patentansprüche

1. Elektromotorischer Möbelantrieb, mit maximal zwei Antriebsmotoren und zwei antreibbaren Antriebszügen, bei dem jedes Abtriebsglied eines Antriebszuges mit einem Anlenkhebel zusammenwirkt, der drehfest auf ein schwenkbares Möbelteil aufgesetzt ist, und jeder Antriebszug zumindest teilweise in einem Gehäuse angeordnet ist, **dadurch gekennzeichnet, dass** das Gehäuse einen aus einem metallischen Werkstoff bestehenden, einstückigen Profilschienenabschnitt (15) aufweist, über den die Kräfte vollständig ableitbar sind, dass in den Profilschienenabschnitt (15) zur Halterung zumindest des Motors und des Schneckenrades jedes Antriebszuges ein klotzartiger Getriebewinkel (37) schließend eingesetzt ist, der zwei rechtwinklig zueinander stehende Flächen aufweist und der der Innenkontur des Profilschienenabschnittes (15) entspricht, dass die Querschnitte über die gesamte Länge des Profilschienenabschnittes (15) in vorgegebenen Abständen unterschiedlich sind, dass der Profilschienenabschnitt (15) in dem Endbereich einen U-förmigen Querschnitt aufweist, und dass der Profilschienenabschnitt (15) zur Festlegung an Wellen (17) eines Möbelbauteiles mit zwei im Abstand zueinander angeordneten Einhängeelementen (22, 33, 34) versehen ist, die an den einander zugewandten Seiten mit U-förmigen Ausnehmungen zur Aufnahme von Wellen (17) des Möbelbauteiles ausgestattet sind.

2. Elektromotorischer Möbelantrieb nach Anspruch 1, **dadurch gekennzeichnet, dass** der Profilschienenabschnitt (15) ein einstückiger Abschnitt ist und vorzugsweise, bezogen auf die vertikale Mittelebene einen symmetrischen oder annähernd asymmetrischen Querschnitt aufweist.

3. Elektromotorischer Möbelantrieb nach Anspruch 1 oder 2, **dadurch gekennzeichnet, dass** der Profilschienenabschnitt (15) durch aufgebrachte Verstärkungsplatten versteift ist.

4. Elektromotorischer Möbelantrieb nach einem oder mehreren der vorhergehenden Ansprüche 1 bis 3, **dadurch gekennzeichnet, dass** der Profilschienenabschnitt (15) einen in sich geschlossenen Querschnitt aufweist.

5. Elektromotorischer Möbelantrieb nach einem oder mehreren der vorhergehenden Ansprüche 1 bis 4, **dadurch gekennzeichnet, dass** der Profilschienenabschnitt (15) in einem oder in beiden Endbereichen einen U-förmigen Querschnitt aufweist.

6. Elektromotorischer Möbelantrieb nach einem oder mehreren der vorhergehenden Ansprüche 1 bis 6, **dadurch gekennzeichnet, dass** der Profilschienenabschnitt (15) einen C-förmigen Querschnitt aufweist.

7. Elektromotorischer Möbelantrieb nach einem oder mehreren der vorhergehenden Ansprüche 1 bis 6, **dadurch gekennzeichnet, dass** der Profilschienenabschnitt (15) einen U-förmigen Querschnitt aufweist.

8. Elektromotorischer Möbelantrieb nach Anspruch 7, **dadurch gekennzeichnet, dass** ein freier Endbereich eines der parallelen Schenkel in Richtung zum anderen Schenkel abgewinkelt ist.

9. Elektromotorischer Möbelantrieb nach Anspruch 7, **dadurch gekennzeichnet, dass** ein freier Endbereich eines der parallelen Schenkel zur Bildung eines Führungskanals (28) zweimal abgewinkelt ist.

10. Elektromotorischer Möbelantrieb nach Anspruch 7, **dadurch gekennzeichnet, dass** die freien Endbereiche der beiden parallelen Schenkel des Profilschienenabschnittes (15) zur Bildung von äußeren Rastnuten (29) U-förmig ausgebildet sind.

11. Elektromotorischer Möbelantrieb nach Anspruch 10, **dadurch gekennzeichnet, dass** der Profilschienenabschnitt (15) mittels einer vorzugsweise durch Rastung festgelegten Abdeckkappe (30) verschlossen ist.

12. Elektromotorischer Möbelantrieb nach einem oder mehreren der vorhergehenden Ansprüche 1 bis 6, **dadurch gekennzeichnet, dass** der Profilschienenabschnitt (15) zur Festlegung an Wellen (17) eines Möbelbauteiles mit zwei aufragenden, im Abstand zueinander angeordneten Einhängeelementen (22, 33, 34) versehen ist.

13. Elektromotorischer Möbelantrieb nach Anspruch 12, **dadurch gekennzeichnet, dass** die Einhängeelemente (22, 33, 34) an den einander zugewandten Seiten mit U-förmigen oder halbkreisförmigen Ausnehmungen zur Aufnahme von Wellen (17) eines Möbelbauteiles ausgestattet sind.

14. Elektromotorischer Möbelantrieb nach Anspruch 12, **dadurch gekennzeichnet, dass** die Einhängeelemente (22, 33, 34) vorzugsweise durch Schweißung fest mit dem Profilschienenabschnitt (15) verbunden sind.

15. Elektromotorischer Möbelantrieb nach Anspruch 12, **dadurch gekennzeichnet, dass** die Einhängeelemente (22, 33, 34) durch Ausklinken von zwei parallel und im Abstand voneinander verlaufenden Wänden eines Profilschienenabschnittes (15) gebildet sind.

16. Elektromotorischer Möbelantrieb nach einem oder mehreren der vorhergehenden Ansprüche 1 bis 11, **dadurch gekennzeichnet, dass** der Profilschienenabschnitt (15) zur Aufnahme von Wellen (17) eines Möbelbauteiles mit im Abstand zueinander angeordneten Bohrungen (31, 32) versehen ist, die sich durch zwei parallel und im Abstand zueinander verlaufende Wandungen hindurch erstrecken.

17. Elektromotorischer Möbelantrieb nach einem oder mehreren der vorhergehenden Ansprüche 1 bis 11, **dadurch gekennzeichnet, dass** der Profilschienenabschnitt (15) an einer Seite mit Ausnehmungen ausgestattet ist, in die Wellen (17) eines Möbelbauteiles eingreifen und dass zumindest die Ausnehmungen durch ein Spannelement (35) abgedeckt sind.

18. Elektromotorischer Möbelantrieb nach einem oder mehreren der vorhergehenden Ansprüche 1 bis 11, **dadurch gekennzeichnet, dass** der Profilschienenabschnitt (15) mit Laschen (36) ausgestattet ist, die durch Verbindungselemente mit dem Profilschienenabschnitt (15) verbunden sind, und die Bohrungen aufweisen, in die die Wellen (17) von Möbelbauteilen eingreifen.

19. Elektromotorischer Möbelantrieb nach einem oder mehreren der vorhergehenden Ansprüche 1 bis 11, **dadurch gekennzeichnet, dass** der Profilschienenabschnitt (15) in seiner Grundkontur U-förmig ausgebildet ist, und dass die freien Randbereiche der sich gegenüberliegenden Schenkel abgewinkelt und aufeinander zu gerichtet sind, und dass die Abwinklung scharfkantig oder in einem Radius verläuft.

20. Elektromotorischer Möbelantrieb nach Anspruch 1, **dadurch gekennzeichnet, dass** der Profilschienenabschnitt (15) als Rohr mit einem kreisringförmigen Querschnitt ausgebildet ist.

21. Elektromotorischer Möbelantrieb nach einem oder mehren der vorhergehenden Ansprüchen 1 bis 20, durch gekennzeichnet, dass der Profilschienenabschnitt (15) belastungsabhängig partiell verstärkt ist.

22. Elektromotorischer Möbelantrieb nach Anspruch 21, **dadurch gekennzeichnet, dass** der Profilschienenabschnitt (15) durch vorzugsweise in Längsrichtung eingeformte Sicken, Einziehungen, Ausbeulungen und dergleichen verstärkt ist.

## Claims

1. Electromotive furniture drive which has a maximum of two drive motors and two drivable drive trains and in the case of which each output member of a drive train interacts with an articulation lever which is positioned in a rotationally fixed manner on a pivotable furniture part, and each drive train is arranged, at least in part, in a housing, **characterized in that** the housing has a single-piece profile-rail portion (15), which consists of a metallic material and via which the forces can be dissipated in full, **in that**, for the purpose of retaining at least the motor and the worm wheel of each drive train, a block-like angular gear-mechanism bracket (37) is inserted into the profile-rail portion (15) so as to close the same, the angular gear-mechanism bracket having two surfaces at right angles to one another and corresponding to the inner contour of the profile-rail portion (15), **in that** the cross sections differ, at predetermined intervals, over the entire length of the profile-rail portion (15), **in that** the profile-rail portion (15) has a U-shaped cross section in the end region, and **in that** the profile-rail portion (15), for securing on shafts (17) of a furniture component, is provided with two spaced-apart mounting elements (22, 33, 34), these being provided, on the mutually facing sides, with U-shaped recesses for accommodating shafts (17) of the furniture component.

2. Electromotive furniture drive according to Claim 1, **characterized in that** the profile-rail portion (15) is a single-piece portion and preferably, as seen in relation to the vertical centre plane, has a symmetrical or more or less asymmetrical cross section.

3. Electromotive furniture drive according to Claim 1 or 2, **characterized in that** the profile-rail portion (15) is stiffened by having reinforcing plates applied to it.

4. Electromotive furniture drive according to one or more of preceding Claims 1 to 3, **characterized in that** the profile-rail portion (15) has a closed cross section.

5. Electromotive furniture drive according to one or more of preceding Claims 1 to 4, **characterized in that** the profile-rail portion (15) has a U-shaped cross section in one end region or in both end regions.

6. Electromotive furniture drive according to one or more of preceding Claims 1 to 5, **characterized in that** the profile-rail portion (15) has a C-shaped cross section.

7. Electromotive furniture drive according to one or more of preceding Claims 1 to 6, **characterized in that** the profile-rail portion (15) has a U-shaped cross section.

8. Electromotive furniture drive according to Claim 7, **characterized in that** a free end region of one of the parallel legs is angled in the direction of the other leg.

9. Electromotive furniture drive according to Claim 7, **characterized in that** a free end region of one of the parallel legs is angled twice in order to form a guide channel (28).

10. Electromotive furniture drive according to Claim 7, **characterized in that** the free end regions of the two parallel legs of the profile-rail portion (15) are of U-shaped design in order to form outer latching grooves (29).

11. Electromotive furniture drive according to Claim 10, **characterized in that** the profile-rail portion (15) is closed by means of a covering cap (30) secured preferably by latching.

12. Electromotive furniture drive according to one or more of preceding Claims 1 to 6, **characterized in that** the profile-rail portion (15), for securing on shafts (17) of a furniture component, is provided with two upwardly projecting, spaced-apart mounting elements (22, 33, 34).

13. Electromotive furniture drive according to Claim 12, **characterized in that** the mounting elements (22, 33, 34) are provided, on the mutually facing sides, with U-shaped or semicircular recesses for accommodating shafts (17) of a furniture component.

14. Electromotive furniture drive according to Claim 12, **characterized in that** the mounting elements (22, 33, 34) are fixed to the profile-rail portion (15) preferably by welding.

15. Electromotive furniture drive according to Claim 12, **characterized in that** the mounting elements (22, 33, 34) are formed by virtue of two parallel and spaced-apart walls of a profile-rail portion (15) being cut away.

16. Electromotive furniture drive according to one or more of preceding Claims 1 to 11, **characterized in that** the profile-rail portion (15), for accommodating shafts (17) of a furniture component, is provided with spaced-apart bores (31, 32) extending through two parallel and spaced-apart walls.

17. Electromotive furniture drive according to one or more of preceding Claims 1 to 11, **characterized in that** the profile-rail portion (15), on one side, is provided with recesses in which shafts (17) of a furniture component engage, and **in that** at least the recesses are covered by a tensioning element (35).

18. Electromotive furniture drive according to one or more of preceding Claims 1 to 11, **characterized in that** the profile-rail portion (15) is provided with lugs (36), which are connected to the profile-rail portion (15) by connecting elements and have bores in which the shafts (17) of furniture components engage.

19. Electromotive furniture drive according to one or more of preceding Claims 1 to 11, **characterized in that** the profile-rail portion (15) has a U-shaped basic contour, and **in that** the free peripheral regions of the mutually opposite legs are angled and directed towards one another, and **in that** the angling is sharp-edged or runs over a radius.

20. Electromotive furniture drive according to Claim 1, **characterized in that** the profile-rail portion (15) is designed in the form of a tube with an annular cross section.

21. Electromotive furniture drive according to one or more of preceding Claims 1 to 20, **characterized in that** the profile-rail portion (15) is reinforced partially in a loading-dependent manner.

22. Electromotive furniture drive according to Claim 21, **characterized in that** the profile-rail portion (15) is reinforced by beads, taperings, convexities and the like formed preferably in the longitudinal direction.

## Revendications

1. Dispositif d'entrainement électromotorisé destiné à un meuble comportant au maximum deux moteurs d'entrainement et deux trains d'entrainement dans lequel chacun des éléments entrainés d'un train d'entrainement, coopère avec un levier articulé qui est monté fixe en rotation sur une partie de meuble pivotante, et chaque train d'entrainement est positionné au moins partiellement dans un boitier,
**caractérisé en ce que**
le boitier comporte un tronçon de rail profilé (15) en une partie, réalisé en un matériau métallique, par l'intermédiaire duquel les contraintes peuvent être totalement évacuées dans chaque tronçon de rail profilé (15) est inséré en fermeture une équerre de transmission en forme de bloc (37) permettant de maintenir au moins le moteur et la roue à denture hélicoïdale de chaque train d'entrainement et qui comporte deux surfaces perpendiculaires l'une à l'autre et correspond au contour interne du tronçon de rail profilé (15), les sections diffèrent à intervalles prédéfinis sur la totalité de la longueur du tronçon de rail profilé (15), le tronçon de rail profilé (15) présente dans sa zone terminale, une section ayant un profil en U, et, pour permettre sa fixation sur des broches (17) d'une partie de meuble, le tronçon de rail profilé (15) est équipé de deux éléments de suspension (22, 33, 34) situés à distance l'un de l'autre qui sont équipés sur leurs faces tournées l'une vers l'autre d'évidements en forme de U permettant la réception des broches (17).

2. Dispositif d'entrainement de meuble électromotorisé conforme à la revendication 1,
**caractérisé en ce que**
le tronçon de rail profilé (15) est un tronçon en une seule pièce, et, présente, de préférence, une section symétrique ou approximativement non symétrique par rapport au plan vertical médian.

3. Dispositif d'entrainement de meuble électromotorisé conforme à la revendication 1 ou 2,
**caractérisé en ce que**
le tronçon de rail profilé (15) est rigidifié par des plaques de renforcement appliquées sur celui-ci.

4. Dispositif d'entrainement de meuble électromotorisé conforme à l'une ou plusieurs des revendications précédentes 1 à 3,
**caractérisé en ce que**
le tronçon de rail profilé (15) présente une section refermée sur elle-même.

5. Dispositif d'entrainement de meuble électromotorisé conforme à l'une ou plusieurs des revendications précédentes 1 à 4,
**caractérisé en ce que**
le tronçon de rail profilé (15) a une section en forme de U au niveau de l'une ou de ses deux zones d'extrémité.

6. Dispositif d'entrainement de meuble électromotorisé conforme à l'une ou plusieurs des revendications précédentes 1 à 5,
**caractérisé en ce que**
le tronçon de rail profilé (15) a une section en forme de C.

7. Dispositif d'entrainement de meuble électromotorisé conforme à l'une ou plusieurs des revendications précédentes 1 à 6,
**caractérisé en ce que**
le tronçon de rail profilé (15) a une section en forme de U.

8. Dispositif d'entrainement de meuble électromotorisé conforme à la revendication 7,
**caractérisé en ce qu'**
une zone d'extrémité libre de l'une des branches parallèles est coudée en direction de l'autre branche.

9. Dispositif d'entrainement de meuble électromotorisé conforme à la revendication 7,
**caractérisé en ce qu'**
une zone d'extrémité libre de l'une des branches parallèles est coudée deux fois pour former un canal de guidage (28).

10. Dispositif d'entrainement de meuble électromotorisé conforme à la revendication 7,
**caractérisé en ce que**
les zones d'extrémité libre des deux branches parallèles du tronçon de rail profilé (15) sont réalisées en forme de U pour former des rainures d'encliquetage externes (29).

11. Dispositif d'entrainement de meuble électromotorisé conforme à la revendication 10,
**caractérisé en ce que**
le tronçon de rail profilé (15) est fermé par un capuchon de recouvrement (30) de préférence fixé par encliquetage.

12. Dispositif d'entrainement de meuble électromotorisé conforme à l'une ou plusieurs des revendications précédentes 1 à 6,
**caractérisé en ce que**
le tronçon de rail profilé (15) est équipé pour permettre sa fixation sur des broches (17) d'une partie de meuble, de deux éléments de suspension en saillie (22, 33, 34) situés à distance l'un de l'autre.

13. Dispositif d'entrainement de meuble électromotorisé conforme à la revendication 12,
**caractérisé en ce que**
les éléments de suspension (22, 33, 34) sont équipés sur leur face tournée l'une vers l'autre d'évidements en forme de U ou de forme semicirculaire pour permettre la réception de broches (17) d'une partie de meuble.

14. Dispositif d'entrainement de meuble électromotorisé conforme à la revendication 12,
**caractérisé en ce que**
les éléments de suspension (22, 33, 34) sont reliés solidairement au tronçon de rail profilé (15) de préférence par soudure.

15. Dispositif d'entrainement de meuble électromotorisé conforme à la revendication 12,
**caractérisé en ce que**
les éléments de suspension (22, 33, 34) sont formés par le décrochement de deux parois d'un tronçon de rail profilé (15) s'étendant parallèlement et à distance l'un de l'autre.

16. Dispositif d'entrainement de meuble électromotorisé conforme à l'une ou plusieurs des revendications précédentes 1 à 11,
**caractérisé en ce que**
pour permettre la réception de broches (17) d'une partie de meuble le tronçon de rail profilé (15) est équipé de perçages (31, 32) situés à distance les uns des autres qui s'étendent au travers de deux parois parallèles situées à distance l'une de l'autre.

17. Dispositif d'entrainement de meuble électromotorisé conforme à l'une ou plusieurs des revendications précédentes 1 à 11,
**caractérisé en ce que**
le tronçon de rail profilé (15) est équipé d'un côté d'évidements dans lesquels viennent en prise les broches (17) d'une partie de meuble, et, au moins les évidements sont recouverts par un élément de serrage (35).

18. Dispositif d'entrainement de meuble électromotorisé conforme à l'une ou plusieurs des revendications précédentes 1 à 11,
**caractérisé en ce que**
le tronçon de rail profilé (15) est équipé de pattes (36) qui sont reliées au tronçon de rail profilé (15) par l'intermédiaire d'éléments de liaison et qui comportent des perçages dans lesquels viennent en prise les broches (17) de parties de meuble.

19. Dispositif d'entrainement de meuble électromotorisé conforme à l'une ou plusieurs des revendications précédentes 1 à 11,
**caractérisé en ce que**
le tronçon de rail profilé (15) est réalisé en forme de U dans son contour de base, les zones de bords libres des branches situées à l'opposé sont coudées et dirigées l'une vers l'autre, et le coudage est à bords vifs ou effectué selon un arc.

20. Dispositif d'entrainement de meuble électromotorisé conforme à l'une ou plusieurs des revendications précédentes 1 à 11,
**caractérisé en ce que**
le tronçon de rail profilé (15) est réalisé sous la forme d'un tube ayant une section circulaire.

21. Dispositif d'entrainement de meuble électromotorisé conforme à l'une ou plusieurs des revendications précédentes 1 à 20,
**caractérisé en ce que**
le tronçon de rail profilé (15) est partiellement renforcé en fonction de la charge.

22. Dispositif d'entrainement de meuble électromotorisé conforme à la revendication 21,
**caractérisé en ce que**
le tronçon de rail profilé (15) est renforcé par des moulures, renfoncements, bossages ou similaire de préférence formés en direction longitudinale.
